# EUROPEAN PATENT SPECIFICATION

(11) **EP 2 470 781 B1**
(45) Date of publication and mention of the grant of the patent: **11.06.2014**
(21) Application number: 10749517.8
(22) Date of filing: 24.08.2010
(51) Int. Cl.: F03B 17/06, B63H 1/36, B64C 9/00

(54) **METHOD AND APPARATUS FOR OSCILLATING A FOIL IN A FLUID**
VERFAHREN UND VORRICHTUNG ZUR OSZILLATION EINES FLÜGELS IN EINER FLÜSSIGKEIT
PROCÉDÉ ET APPAREIL POUR FAIRE OSCILLER UN PROFIL DANS UN FLUIDE

(30) Priority: 24.08.2009 NL 2003387
(43) Date of publication of application: 04.07.2012
(73) Proprietor: Oscillating Foil Development B.V., 3032 BC Rotterdam (NL)
(72) Inventor: GORIS, Bas, NL-3032 BC Rotterdam (NL)
(74) Representative: Louwaard, Jan-Willem Paul
(86) International application number: PCT/NL2010/000125
(87) International publication number: WO 2011/115475

(56) References cited:
- WO-A1-2005/108781
- WO-A1-2008/144938
- FR-A1- 2 278 565
- RU-C1- 2 005 204
- US-A- 365 133
- US-A- 419 321

## Description

The present invention relates to a method and apparatus for oscillating a foil in a fluid as described for example in FR 2 278 565 A1. Oscillating or flapping foils were inspired by the nature of marine swimmers such as the tuna fish, shark, dolphin and whale. Marine swimmers use the combined effects of lift by vortices and lift by attached flow over a curved wing. Current industrial oscillating foils works with the principle of an attached flow over a curved wing. The lift is generated when the foil has an angle with the incoming flow of a medium. The lift is defined as the component of force acting in the plane of symmetry in the direction perpendicular to the incoming medium.

The method according to the invention comprises the steps of
- generating an oscillating heave motion of the foil in the fluid, the oscillation cycle of the heave motion consisting of two strokes of the foil in opposite direction;
- generating an oscillating pitching motion of the foil in the fluid;
characterized by
- controlling the heave motion; and
- adjusting the pitch during the oscillation cycle of the heave motion;
such that
- over 65% till 85% of the oscillation cycle of the heave motion, for instance 65%, 66%, 67%, 68%, 69%, 70%, 71%, 72%, 73, 74%, 75%, 76%, 77%, 78%, 79%, 80%, 81%, 82%, 83%, 84%, 85%, for each stroke of the foil, the absolute angle of attack is more than 60% of the maximum absolute angle of attack during the stroke, for instance 61%, 62%, 63%, 64%, 65%, 66%, 67%, 68%, 69%, 70%, 71%, 72%, 73, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, 100%.

With an oscillating foil, both pitch and heave motions of the foil member need to be controlled, periodically and precisely, to produce the maximum possible efficiency and thrust.

The known methods for oscillating a foil in a fluid, and the design of currently known apparatuses for oscillating a foil in a fluid derived from these know methods, are aimed at generating a pure sinus shaped motion of both pitch and heave resulting in a sinus shape motion of the Angle of Attack as known from theoretical models. An angle of attack, plotted in a graph against the time of one cycle, equal to a sinus has values of more than 60% of the maximum angle of attack (per stroke of the foil) over 59.4% of the cycle, where a cycle is the up and the down stroke of the foil.

Angle of attack is a term used in fluid dynamics to describe the angle between a reference line on a body (in this case the chord line of a foil) and the vector representing the relative motion between the body and the fluid through which it is moving. In general, the reference line could be any line on any arbitrarily shaped body in a flow. The angle of attack would be the angle between the line and the oncoming flow. For a two-dimensional representation of a foil, the angle of attack is the angle between the chord line of the foil and the direction of arrival of the incoming fluid. For the two dimensional representation of the direction of arrival of the incoming fluid the average motion of the fluid over the span of the foil can be taken. Since a foil can have twist, a chord line of the whole foil may not be definable. In that case an alternate reference line is defined. Often, the chord line of the root of the foil is chosen as the reference line.

When applying the method according to the invention relative to the application of the known methods that are aimed at generating a sinus shape motion of the angle of attack, a flattened curve is found for at least one of the strokes when the absolute angle of attack as a percentage of the maximum absolute angle of attack is plotted against the time. This has the advantage over the known methods of a particularly high mean thrust and a high mean efficiency of each oscillation cycle of the heave motion.

In an advantageous embodiment of the method according to the invention 65% to 85% of the oscillation cycle of the heave motion is 65% to 85% of the time to complete one cycle of the heave motion. In an alternative embodiment the 65% to 85% of the oscillation cycle of the heave motion is 65% to 85% of the path of the foil during one cycle of the heave motion.

In an advantageous embodiment of the method according to the invention for each stroke of the foil, the absolute angle of attack is more than 60% of the maximum absolute angle of attack during the stroke over 65% to 85% of the stroke. This embodiment makes it possible to have a particularly high mean thrust and a high mean efficiency for each stroke of the heave motion. Preferably, the absolute angle of attack is more than 60% of the maximum absolute angle of attack during the stroke over 65% to 85% of the time to complete the stroke. Alternatively, the absolute angle of attack is more than 60% of the maximum absolute angle of attack during the stroke over 65% to 85% of the path of the stroke.

In a further advantageous embodiment of the method according to the invention the respective times to complete each of the strokes are substantially the same. This embodiment makes it possible to have a relatively uncomplicated embodiment of an apparatus for performing the method.

In a further advantageous embodiment of the method according to the invention
- the heave motion is controlled by means of a heave motion control mechanism functionally connected to the foil and configured to realize the oscillating heave motion of the foil; and
- the pitch is adjusted by means of a pitch adjusting mechanism functionally connected to the foil for adjusting the pitch of the foil during the oscillation cycle of the heave motion and configured to realize an oscillating pitching motion of the foil.

In an advantageous embodiment of the method according the invention wherein a heave motion control mechanism is used, the heave motion control mechanism comprises:
- a heave crank mechanism having a first crankshaft rotatable about a first axis of rotation and having a first crank pin offset relative to the first axis of rotation;
- a heave connection structure which is at one end rotatable connected to the first crank pin about a second axis of rotation and at another end rotatable connected to the foil about a third axis of rotation; and
- a guiding structure for guiding the oscillating heave motion of the foil.
This embodiment of the method according to the invention, and in particular the application of a crank mechanism therein, makes for a uncomplicated and robust mechanism to transform a rotation into a precise and periodic oscillating heave motion of the foil or vice versa. Furthermore, the application of a crank mechanism allows for relatively easy adjustment of the heave motion by adjusting the first crank pin offset.

In an advantageous embodiment thereof the heave connection structure comprises a first rod which is at a first end thereof rotatable connected to the first crank pin about the second axis of rotation and at a second end thereof connected to the foil. This feature provides for an uncomplicated connection structure that allows for relatively easy adjustment of the heave motion by adjusting the length of the heave connection rod. In an advantageous embodiment thereof the second end of the heave connection rod is rotatable connected to the foil about the third axis of rotation. This feature makes it possible to provide for an uncomplicated and robust realization of the heave connection structure in which the pitch connection rod is directly connected to the foil. In an alternative embodiment the heave connection structure further comprises a first parallelogram structure, which connects the second end of the heave connection rod to the foil. This feature allows for a precise extension of the motion of the second end of the first rod, such that there are more options for the arrangement of the heave crank mechanism and/or the heave connection structure relative to the foil than in case the heave connection rod is directly connected to the foil.

In a further advantageous embodiment of the method according to the invention wherein a heave motion control mechanism comprising a guiding mechanism is used, the foil is rotatable connected to the guiding structure about a fifth axis of rotation. This feature makes it possible to provide for an uncomplicated and robust guiding of translation movement of the foil while not restricting the rotational movement of the foil, thus promoting the separation of the pitch motion of the foil and the guidance of the heave motion of the foil and therewith promoting the control over the pitch motion and the heave motion of the foil. In a preferred embodiment thereof the third axis of rotation and the fifth axis of rotation coincide. This feature makes it possible to further promote the separation of the pitch motion of the foil and the guidance of the heave motion of the foil, thus promoting the control over the pitch motion and heave motion of the foil.

In a further advantageous embodiment of the method according to the invention wherein a heave motion control mechanism comprising a guiding structure is used wherein the foil is rotatable connected to the guiding structure about a fifth axis of rotation, the guiding structure comprises a guide connecting structure which is with one end rotatable connected to the foil about the fifth axis of rotation and with another end rotatable connected with a stationary point, which is stationary relative to the first axis of rotation, about a sixth axis of rotation. This feature makes it possible to provide for an uncomplicated and robust embodiment of the guiding structure. In a preferred embodiment thereof the guide connecting structure comprises a guide connection rod which is at a first end thereof rotatable connected to the foil about the fifth axis of rotation and at a second end thereof rotatable connected to the foil about the sixth axis of rotation.

In a further advantageous embodiment of the method according to the invention wherein a pitch adjusting mechanism is used, the pitch adjusting mechanism comprises:
- a pitch crank mechanism having a second crankshaft rotatable about a seventh axis of rotation and having a second crank pin offset relative to the seventh axis of rotation;
- a pitch connection structure which is with one end rotatable connected to the second crank pin about an eighth axis of rotation and with another end connected to the foil at a connection point offset relative to the third axis of rotation by means of a pitch adjusting lever. This embodiment of the method according to the invention, and in particular the application of a crank mechanism therein, makes for an uncomplicated and robust mechanism to transform a rotation into a precise and periodic oscillating pitch motion of the foil. Furthermore, the application of a crank mechanism allows for relatively easy adjustment of the pitch motion by adjusting the second crank pin offset.

In an advantageous embodiment of the method according to the invention wherein a pitch adjusting mechanism is used comprising a pitch crank mechanism and a pitch connection structure, the pitch connection structure comprises a second rod which is at a first end thereof rotatable connected to the second crank pin about the eighth axis of rotation and at a second end thereof rotatable connected to the foil. This feature provides for an uncomplicated connection structure that allows for relatively easy adjustment of the pitch motion by adjusting the length of the pitch connection rod.

In a preferred embodiment thereof the second end of the pitch connection rod is rotatable connected to the foil at the connection point about a ninth axis of rotation. This feature makes it possible to provide for an uncomplicated and robust realization of the heave connection structure in which the pitch connection rod is directly connected to the foil. In an alternative embodiment the pitch connection structure further comprises a second parallelogram structure, which connects the second end of the pitch connection rod to the connection point. This feature allows for a precise extension of the motion of the second end of the pitch connection rod, such that there are more options for the arrangement of the pitch crank mechanism and/or the pitch connection structure relative to the foil than in case the pitch connection rod is directly connected to the foil.

In a further advantageous embodiment of the method according to the invention wherein a heave crank mechanism and a pitch crank mechanism is used, the heave crank mechanism and the pitch crank mechanism are functionally connected such that when driven the speed of revolution of the heave crank mechanism about the first axis of rotation is the same as the speed of revolution of the pitch crank mechanism about the seventh axis of rotation. This feature makes a precise synchronization of the pitch motion and the heave motion possible. In an advantageous embodiment thereof the first axis of rotation and the seventh axis of rotation coincide. This feature provides for an uncomplicated robust functional connection of the first and pitch crank mechanism.

In a further advantageous embodiment of the method according to the invention the foil is designed such that it is flexible along the chord line thereof. This feature makes it possible to provide for a higher efficiency and a lower lift force. In an alternative or additional embodiment the foil is designed such that it is bendable along the span thereof. This feature makes it possible to provide for a higher efficiency and a lower lift force.

In a further advantageous embodiment of the method according to the invention a drive for driving at least one of the heave crank mechanism and the pitch crank mechanism is functionally connected to at least one of the heave crank mechanism and the pitch crank mechanism. This feature makes it possible to use the method according to the invention to for instance propel a vessel or to generate a whirl or flow in a fluid.

In an alternative embodiment the method according to the invention a power generator is functionally connected to at least one of the heave crank mechanism and the pitch crank mechanism. This feature makes it possible to use the method according to the invention for generating power from a fluid flow.

The invention further relates to an apparatus for performing the method according to the invention as described herein above, comprising
- a heave motion control mechanism functionally connected to the foil and configured to realize an oscillating heave motion of the foil, the oscillating heave motion consisting of two strokes of the foil in opposite direction; and
- a pitch adjusting mechanism functionally connected to the foil for adjusting the pitch of the foil during the oscillation cycle of the heave motion and configured to realize an oscillating pitching motion of the foil relative to the fluid;
   wherein the heave motion control mechanism and the pitch adjusting mechanism are configured such that
- at at least one determined inflow speed, and at at least one frequency of the oscillating heave motion, over 65% to 85% of the oscillation cycle of the heave motion for each stroke of the foil, the absolute angle of attack is more than 60% of the maximum absolute angle of attack during the stroke.

The inflow speed is the relative speed between the fluid and the apparatus as a whole, also known as velocity of advance.

In an advantageous embodiment of the apparatus according to the invention 65% to 85% of the oscillation cycle of the heave motion is 65% to 85% of the time to complete one cycle of the heave motion. In an alternative embodiment the 65% to 85% of the oscillation cycle of the heave motion is 65% to 85% of the path of the foil during one cycle of the heave motion.

In an advantageous embodiment of the apparatus according to the invention for each stroke of the foil, the absolute angle of attack is more than 60% of the maximum absolute angle of attack during the stroke over 65% to 85% of the stroke. Preferably, the absolute angle of attack is more than 60% of the maximum absolute angle of attack during the stroke over 65% to 85% of the time to complete the stroke. Alternatively, the absolute angle of attack is more than 60% of the maximum absolute angle of attack during the stroke over 65% to 85% of the path of the stroke.

In a further advantageous embodiment of the apparatus according to the invention the respective times to complete each of the strokes are substantially the same.

Further advantageous embodiments of the heave control mechanism and the pitch adjusting mechanism of the apparatus according to the invention are described hereinabove with respect to the method according to the invention.

The invention further relates to a vessel comprising a hull, and an apparatus according to the invention having a drive for driving at least one of the heave crank mechanism and the pitch crank mechanism, wherein at least the foil is located outside the hull. In an embodiment of the vessel according to the invention the at least one determined inflow speed is a design speed of the vessel, and the at least one frequency of the oscillating heave motion the design frequency for said design speed.

The invention further relates to an installation for generating energy from a flow of fluid, such as water in a river, comprising an apparatus according to the invention having a power generator functionally connected to at least one of the heave crank mechanism and the pitch crank mechanism, wherein at least the foil is located in the flow of fluid. In an embodiment of the installation for generating energy from a flow of fluid according to the invention the at least one determined inflow speed is a design flow speed of the fluid the installation is designed for, and the at least one frequency of the oscillating heave motion the design frequency for said design flow speed.

The invention further relates to an installation for generating a flow or whirl in a fluid, such as a mixer or a pump, comprising an apparatus according to the invention having a drive for driving at least one of the heave crank mechanism and the pitch crank mechanism, wherein at least the foil is located in the fluid in which the flow or whirl is to be generated. In an embodiment of the installation for generating a flow or whirl in a fluid according to the invention the at least one determined inflow speed is a design flow speed of the fluid the installation is designed to generate, and the at least one frequency of the oscillating heave motion the design frequency for said design flow speed.

The invention further relates to an installation, comprising at least two functionally connected apparatuses according to the invention, wherein the apparatus are out of phase with each other. This feature makes it possible to achieve a more smoothed flow downstream of the foil and a more smoothed torque at the drive or generator.

The present invention will be further elucidated herein after on the basis of exemplary embodiments, which are shown schematically in the accompanying figures. These are non limitative exemplary embodiments. In the figures features with the same reference sign are the same. In the figures:
- fig. 1 shows a schematic representation of an embodiment of the apparatus according to the invention;
- figs. 2A to 2D show a wire-frame model of the embodiment of the apparatus 18 for oscillating a foil shown in figure 1 in four subsequent moments in time of one cycle of the heave motion of the foil in a fluid;
- figs. 3A and 3B show the angle of attack as a percentage of the maximum absolute angle of attack set out against the time in percentage of the time of a oscillation cycle of the heave motion as a result of performing the method according to the invention;
- fig. 4 shows the angle of attack as a percentage of the maximum absolute angle of attack set out against the time in percentage of the time of a oscillation cycle of the heave motion as a result of performing a known method aimed at achieving a sinus shape motion of the Angle of Attack;
- fig. 5 shows a schematic representation of an alternative embodiment of the apparatus of figures 1;
- fig. 6 shows a schematic representation of a further alternative embodiment of the apparatus of figure 1 ;
- figs. 7A to 7D show a wire-frame model of the embodiment of the apparatus for oscillating a foil shown in figure 6 in four subsequent moments in time of one cycle of the heave motion of the foil in a fluid;
- fig. 8 shows a vessel with a hull and the embodiment of the apparatus according to the invention of figure 6;
- fig. 9 shows a schematic representation of an alternative embodiment of the embodiment of the apparatus according to the invention as shown in figure 8;
- figs. 10, 11 and 12 show a schematic representation of further alternative embodiments of the apparatus according to the invention as shown in figures 1 to 9.

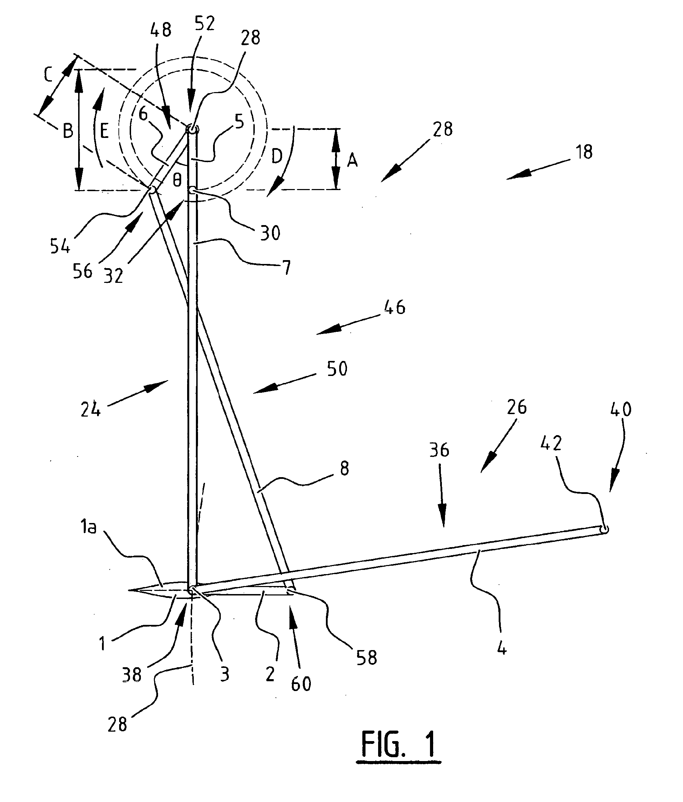

Figure 1 shows an embodiment of the apparatus according to the invention.

The apparatus 18 shown in figures 1 has a heave motion control mechanism 20 functionally connected to the foil 1 which is configured to realize an oscillating heave motion of the foil 1 having a cord line 1a, the oscillating heave motion consisting of two strokes of the foil in opposite direction. The heave motion control mechanism 20 is shown with a heave crank mechanism 22, a heave connection structure 24, and a guiding structure 26. Shown in figure 1 is a two-dimensional representation of the foil 1.

The heave crank mechanism 22 is shown with a first crankshaft 5, also referred to as power crank, rotatable about a first axis of rotation 28 and having a first crank pin 30 offset relative to the first axis of rotation 28 over a crank pin offset forming distance A.

The crank mechanism is connected to the foil 1 by means of the heave connection structure 24, which is shown with a heave connection rod 7, also referred to as power rod, which is at a first end thereof rotatable connected to the first crank pin 30 about a second axis of rotation 32 and at a second end thereof rotatable connected to the foil 1 about a third axis of rotation 3.

The guiding structure 26 serves for guiding the oscillating heave motion of the foil 1, and comprises a guide connection structure 36 having a guide connection rod 4, also referred to as kite rod, which is at a first end thereof rotatable connected to the foil about a fifth axis of rotation 38, which coincides with the third axis of rotation 3, and at a second end thereof rotatable connected a stationary point 40, which is stationary relative to the first axis of rotation 28, about a sixth axis of rotation 42. The third axis of rotation 3, being the rotation point of the foil 1, is restricted in movement by a partial circular curve 44 defined by the guide connection rod 4 and the stroke B of the first crankshaft 5.

The apparatus 18 shown in figure 1 further has a pitch adjusting mechanism 46 functionally connected to the foil 1 for adjusting the pitch of the foil during the oscillation cycle of the heave motion and configured to realize an oscillating pitching motion of the foil 1 . The pitch control mechanism 46 is shown with a pitch crank mechanism 48, and a pitch connection structure 50.

The pitch crank mechanism 48 is shown with a second crankshaft 6 rotatable about a seventh axis of rotation 52 and having a second crank pin 54 offset relative to the seventh axis of rotation 52 over a crank pin offset forming distance C. The seventh axis of rotation 52 coincides with the first axis of rotation 28, and the heave crank mechanism 5 and the pitch crank mechanism 6 are functionally connected such that when driven the speed of revolution D of the heave crank mechanism 22 about the first axis of rotation 28 is the same as the speed of revolution E of the pitch crank mechanism 48 about the seventh axis of rotation 52. Further as shown in figure 1 there is a phase difference θ between the first crankshaft 5 and the second crankshaft 6.

The pitch connection structure 50 is shown with a pitch connection rod 8, also referred to as pitch adjusting rod, which is at a first end thereof rotatable connected to the second crank pin 54 about an eighth axis of rotation 56 and at a second end thereof rotatable connected to the foil about a ninth axis of rotation 58 at a connection point 60 offset relative to the third axis of rotation 3 by means of a pitch adjusting lever 2.

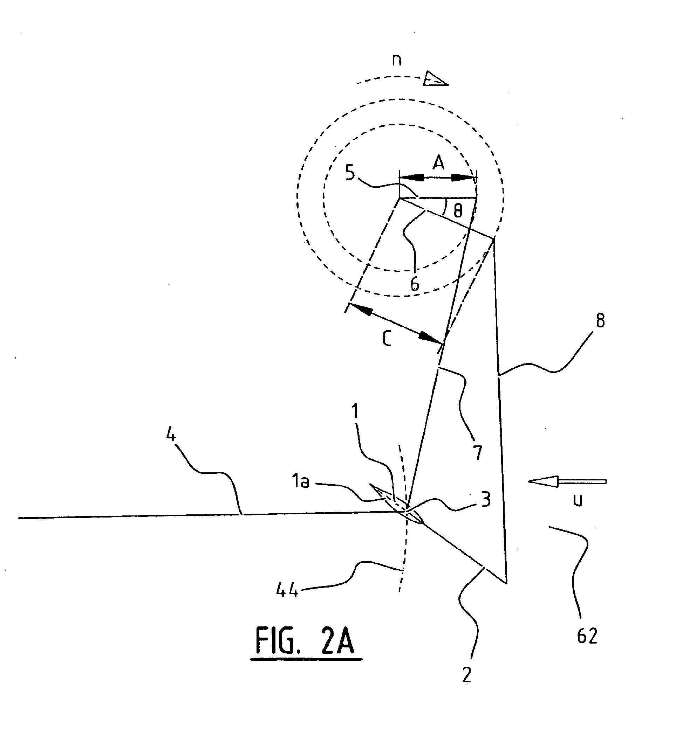

Figures 2A to 2D show a wire-frame model of the embodiment of the apparatus 18 for oscillating a foil 1 shown in figure 1 in four subsequent moments in time of one cycle of the heave motion of the foil 1 in a fluid 62. Shown in figure 2A to 2D is a two-dimensional representation of the foil 1. In figures 2A to 2D the apparatus 18 as a whole is stationary, while the fluid flows with a determined flow speed relative to the apparatus as a whole. The arrow U represents the inflow speed, being the relative speed between the fluid and the apparatus as a whole.

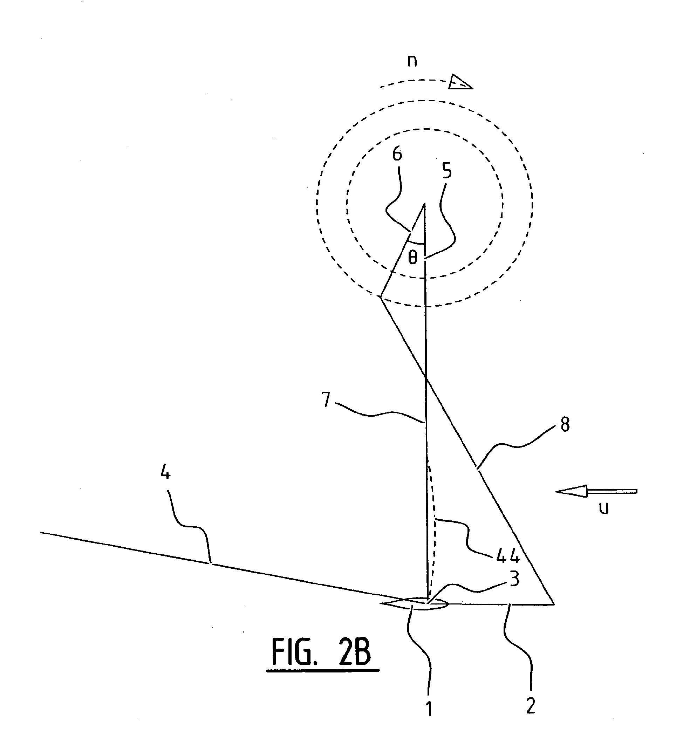

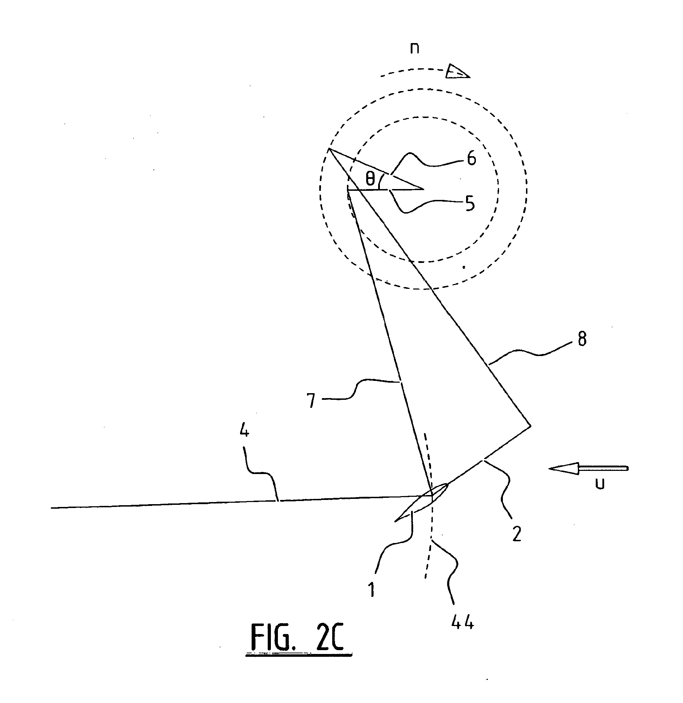

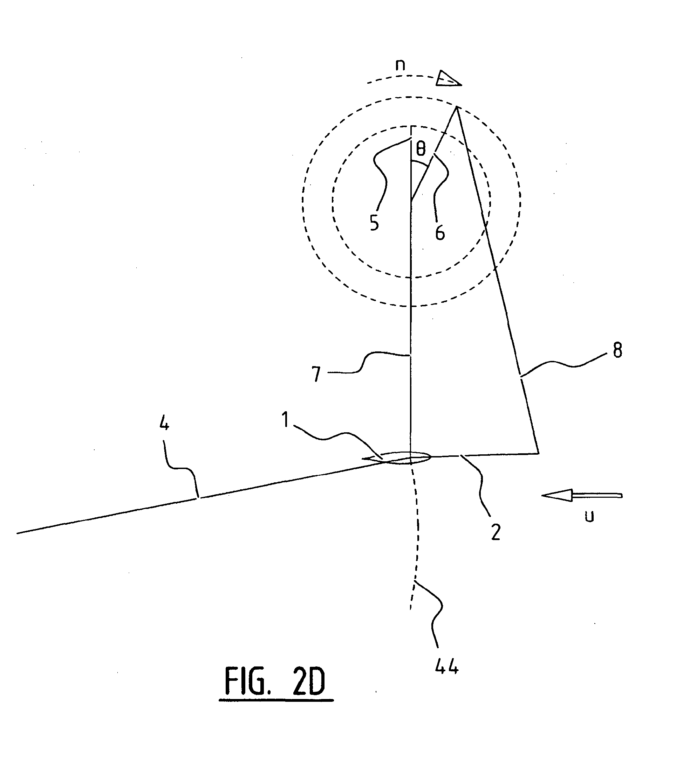

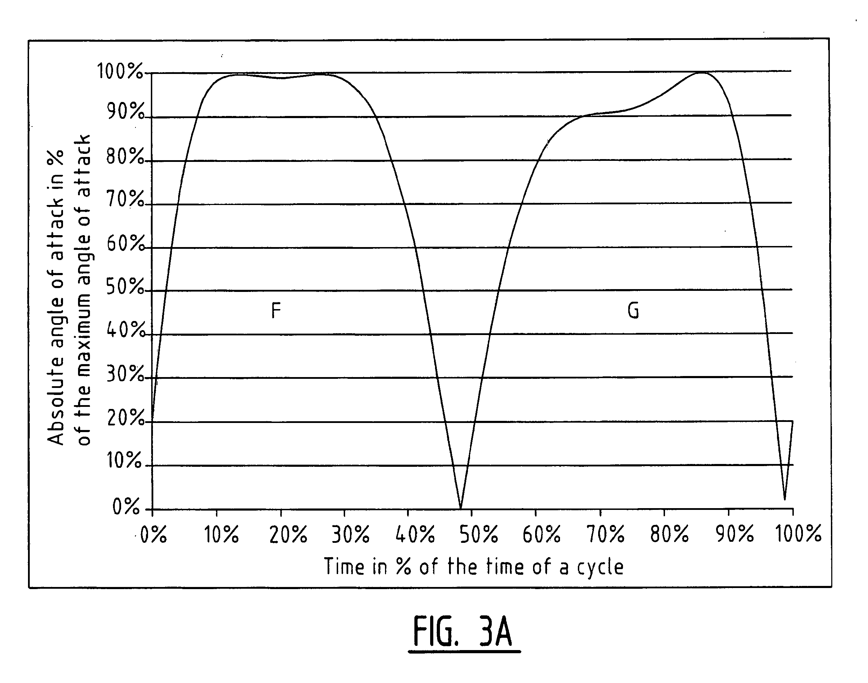

In the apparatus as shown in figures 1 and 2:
- the heave crank pin offset A and the second crank pin offset C, the second crank pin offset C being greater than the first crank pin offset A, are adjusted;
- the phase offset θ between the heave crankshaft 5 and the pitch crankshaft 6, is adjusted;
- the length of the heave connection rod 7 is adjusted; and
- the length of the pitch connection rod 8 is adjusted;
such that at a certain inflow speed U and a certain rotation speed n of the crankshafts , the rotation speed being a representation of the frequency of the generated heave motion, the foil 1 will oscillate in that way that, as shown in figure 3A wherein the angle of attack as a percentage of the maximum absolute angle of attack set out against the time in percentage of the time of an oscillation cycle of the heave motion, over 65% to 85% of the oscillation cycle of the heave motion for each stroke F, G of the foil, the absolute angle of attack is more than 60% of the maximum absolute angle of attack during the stroke.

In particular in figure 3A is shown that for each stroke F, G of the foil, the absolute angle of attack is more than 60% of the maximum absolute angle of attack during the stroke over 65% to 85% of the time to complete the stroke, and that the respective times to complete each of the strokes are substantially the same. For each stroke, the curve is a flattened curve.

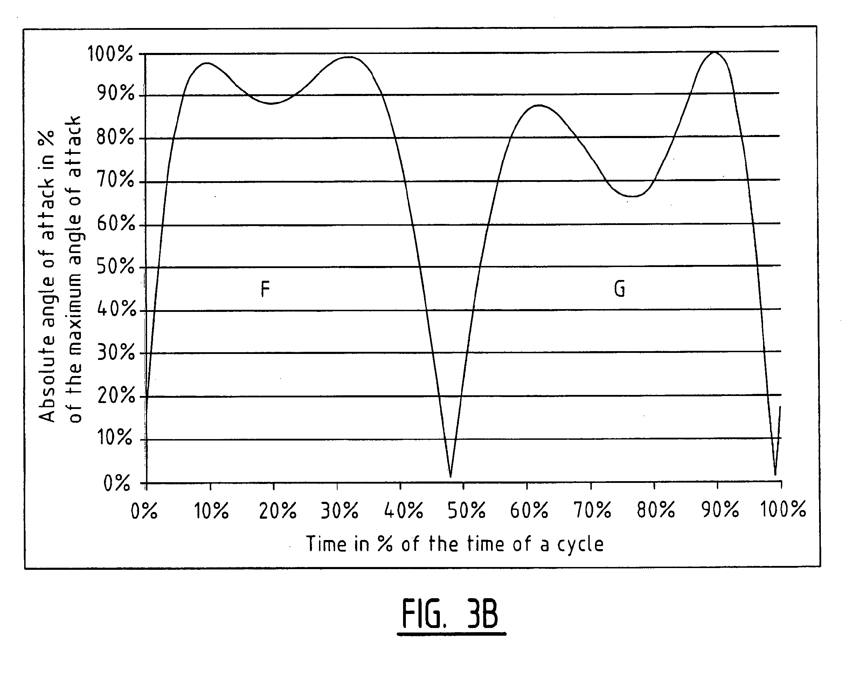

Another example of a flattened curve of angle of attack as a percentage of the maximum absolute angle of attack set out against the time in percentage of the time of a oscillation cycle of the heave motion, wherein over 65% to 85% of the oscillation cycle of the heave motion for each stroke of the foil, the absolute angle of attack is more than 60% of the maximum absolute angle of attack during the stroke, is shown in figure 3B. As in figure 3A, in figure 3B is shown that for each stroke F, G of the foil, the absolute angle of attack is more than 60% of the maximum absolute angle of attack during the stroke over 65% to 85% of the time to complete the stroke, and that the respective times to complete each of the strokes are substantially the same.

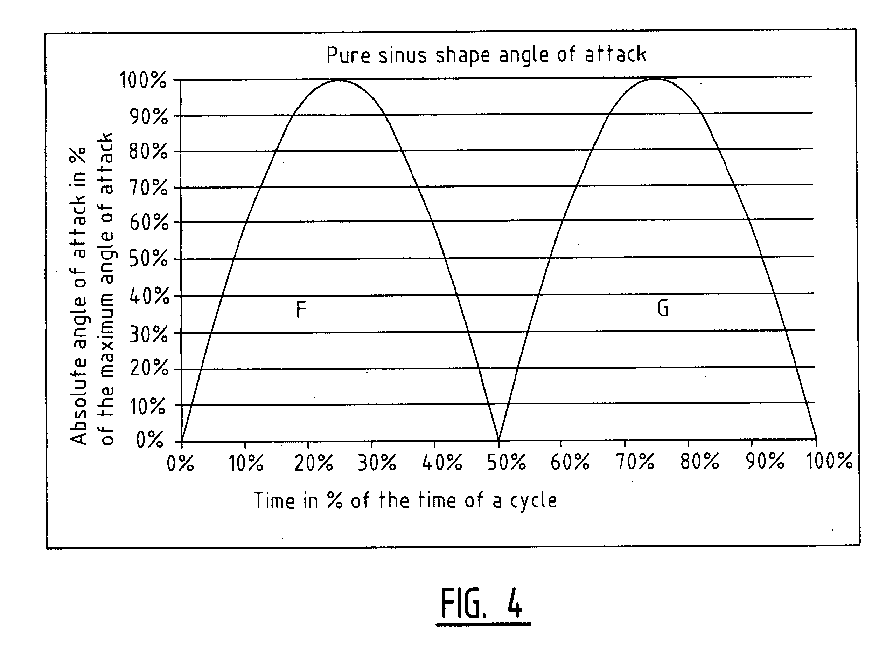

In both figures 3A and 3B, for each stroke F, G, the curve is a flattened curve relative to the curve as shown in figure 4.Figure 4 shows the angle of attack as a percentage of the maximum absolute angle of attack set out against the time in percentage of the time of a oscillation cycle of the heave motion as a result of performing a known method aimed at achieving a sinus shape motion of the Angle of Attack. The angle of attack has values of more than 60% of the maximum angle of attack per stroke F, G, of the foil over 59.4% of the cycle, where a cycle is the up and the down stroke of the foil.

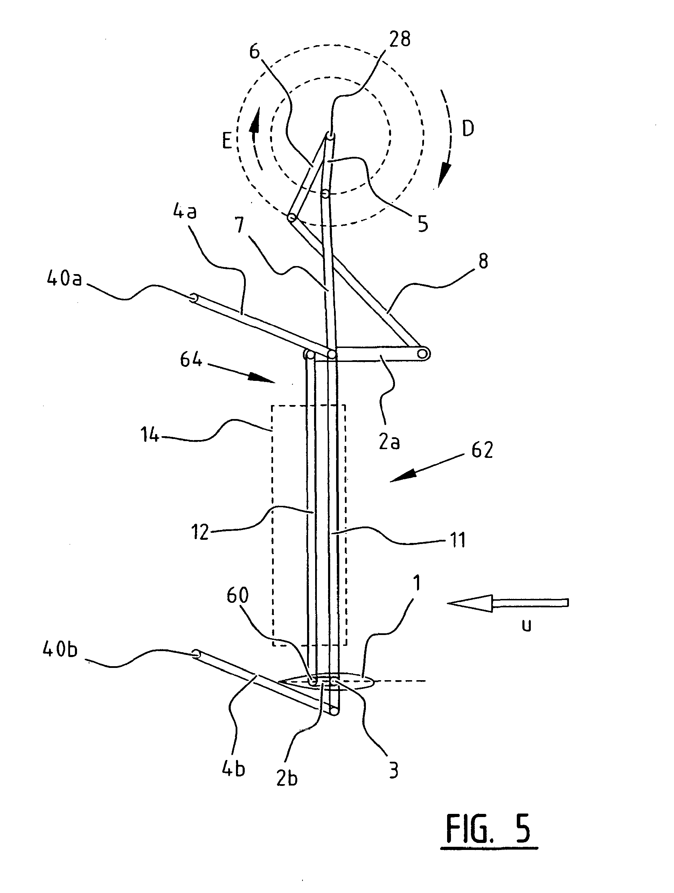

In figure 5 is an alternative embodiment of the apparatus 18 according to the invention as shown in figure 1 is shown. The apparatus as shown in figure 5 differs from the apparatus as shown in figure 1 in that the second ends of respectively the heave connection rod 7 and the pitch connection rod 8 are not directly connected to the foil 1 but via respectively a heave parallelogram structure 62 and a pitch parallelogram structure 64. Shown in figure 5 is a two-dimensional representation of the foil 1.

The heave parallelogram structure 62, consists of the rotatable interconnected rods 4a, 4b, and 11, connects the second end of the heave connection rod 7 to the foil 1. The pitch parallelogram structure 64, i.e. the pitch parallelogram, consisting of the rotatable interconnected rods 2a, 11, 12, and the pitch adjusting lever 2b, connects the second end of the pitch connection rod 8 to the connection point. Since the rods 11 and 12 remain parallel throughout the oscillating heave motion of the foil 1, a schematically shown streamlined enclosure 14 can be arranged around the rods 11 and 12 to reduce the drag of the rods 11 and 12 in the fluid.

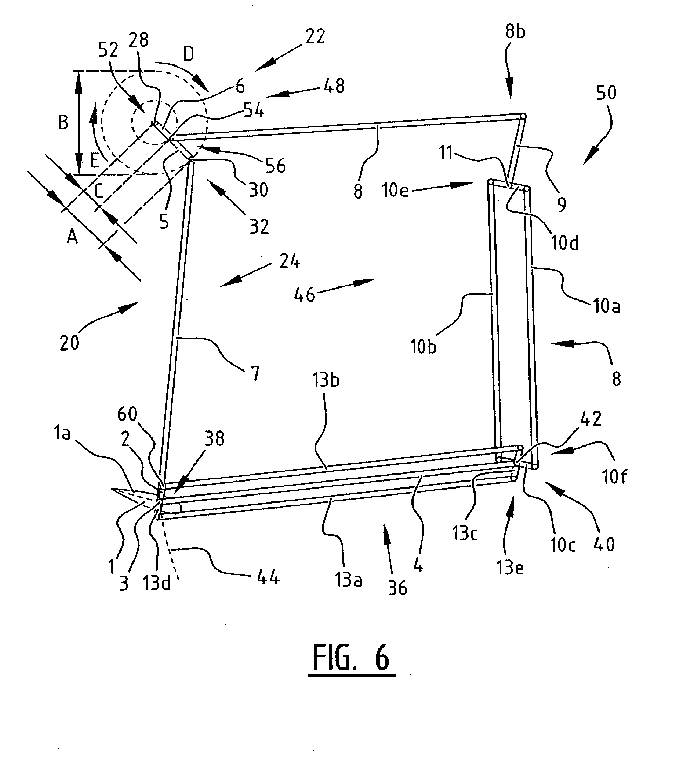

In figures 6 an alternative embodiment is shown of the apparatus according to the invention as shown in figure 1.

The apparatus 18 shown in figures 6 has a heave motion control mechanism 20 functionally connected to the foil 1 which is configured to realize an oscillating heave motion of the foil 1 having a cord line 1a, the oscillating heave motion consisting of two strokes of the foil 1 in opposite direction. Shown in figure 6 is a two-dimensional representation of the foil 1.

The heave motion control mechanism 20 is shown with a heave crank mechanism 22, a heave connection structure 24, and a guiding structure 26.

The heave crank mechanism 22 is shown with a heave crankshaft 5, also referred to as power crank, rotatable about a first axis of rotation 28 and having a first crank pin 30 offset relative to the first axis of rotation 28 over a crank pin offset forming distance A.

The heave crank mechanism 22 is connected to the foil 1 by means of the heave connection structure 24, which is shown with a heave connection rod 7, also referred to as power rod, which is at a first end thereof rotatable connected to the first crank pin 30 about a second axis of rotation 32 and at a second end thereof rotatable connected to the foil 1 about a third axis of rotation 3.

The guiding structure 26 serves for guiding the oscillating heave motion of the foil 1, and comprises a guide connection structure 36 having a guide connection rod 4, also referred to as kite rod, which is at a first end thereof rotatable connected to the foil 1 about a fifth axis of rotation 38, which coincides with the third axis of rotation 3, and at a second end thereof rotatable connected a stationary point 40, which is stationary relative to the first axis of rotation 28, about a sixth axis of rotation 42. The third axis of rotation 3, being the rotation point of the foil 1, is restricted in movement by a partial circular curve 44 defined by the guide connection rod 4 and the stroke B of the first crankshaft 5.

The apparatus shown in figure 6 further has a pitch adjusting mechanism 46 functionally connected to the foil 1 for adjusting the pitch of the foil 1 during the oscillation cycle of the heave motion and configured to realize an oscillating pitching motion of the foil 1. The pitch control mechanism 46 is shown with a pitch crank mechanism 48, and a pitch connection structure 50.

The pitch crank mechanism 48 is shown with a second crankshaft 6 rotatable about a seventh axis of rotation 52 and having a pitch crank pin 54 offset relative to the seventh axis of rotation 52 over a crank pin offset forming distance C. The seventh axis of rotation 52 coincides with the first axis of rotation 28, and the heave crank mechanism 22 and the pitch crank mechanism 48 are functionally connected such that when driven the speed of revolution D of the heave crank mechanism 22 about the first axis of rotation 28 is the same as the speed of revolution E of the pitch crank mechanism 48 about the seventh axis of rotation 52. Further as shown in figure 6 there is no phase difference between the heave crankshaft 5 and the pitch crankshaft 6.

The pitch connection structure 50 has a pitch connection rod 8, also referred to as pitch adjusting rod, which is at a first end thereof rotatable connected to the pitch crank pin 54 about an eighth axis of rotation 56 and at a second end thereof rotatable connected to the foil 1 by means of a pitch parallelogram structure 64. The pitch parallelogram structure 64 is shown having a lever rod 9, a first parallelogram 10 comprising rotatable interconnected rods 10a to 10d, and a second parallelogram 13 comprising rotatable interconnected rods 13a to 13d. The lever rod 9 connects the second end 8b of the pitch connection rod 8 to a first end 10e of the first parallelogram 10 at a point 11 stationary relative to the first axis of rotation 28. The second end 10f of the first parallelogram 10 is connected to the first end 133 of the second parallelogram 13 at the stationary point 40 to which point the guide connection rod 4 is connected. The second end 13f of the second parallelogram 13 is connected to the foil 1. As such the pitch parallelogram structure 64 connects the second end 8b of the pitch connection rod 8 to the connection point 60 offset relative to the third axis of rotation 3 by means of the pitch adjusting lever 2.

The function of the guide connecting rod 4 is to transfer the vertical forces of the foil to the stationary point 12, but this function can be taken by the second parallelogram 13 as well.

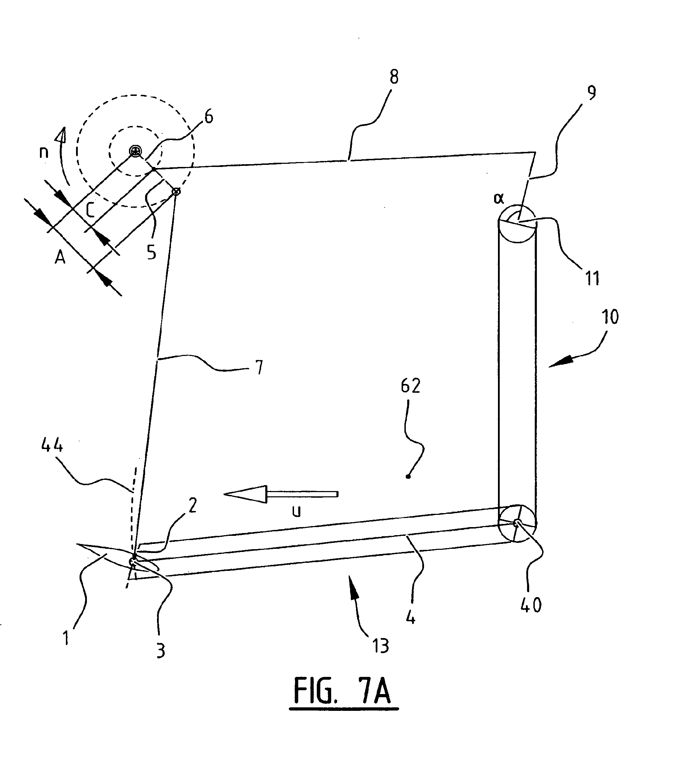

In figures 7A to 7D show a wire-frame model of the embodiment of the apparatus 18 for oscillating a foil 1 shown in figure 6 in four subsequent moments in time of one cycle of the heave motion of the foil 1 in a fluid 62. Shown in figures 7A to 7D is a two-dimensional representation of the foil 1. In figures 7A to 7D the apparatus 18 as a whole is stationary, while the fluid flows with a determined flow speed relative to the apparatus as a whole. The arrow U represents the inflow speed, being the relative speed between the fluid and the apparatus as a whole.

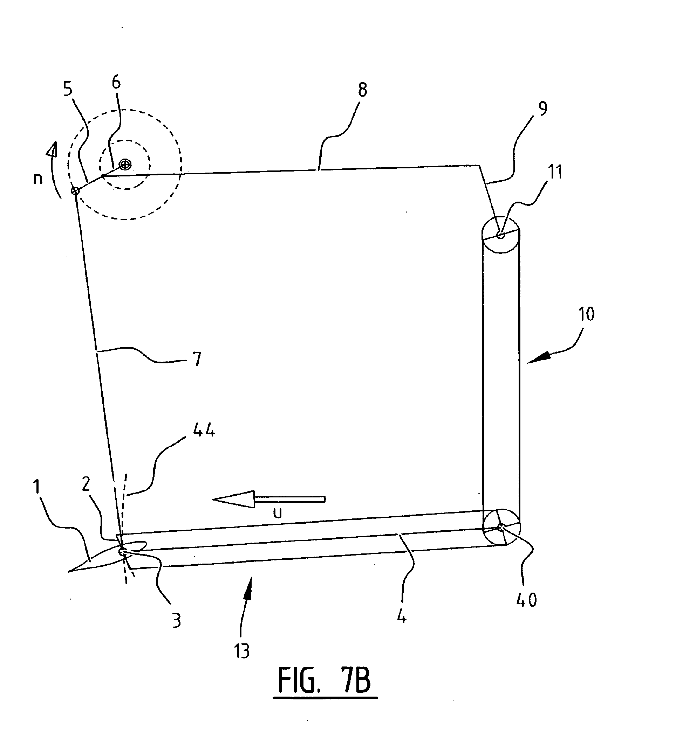

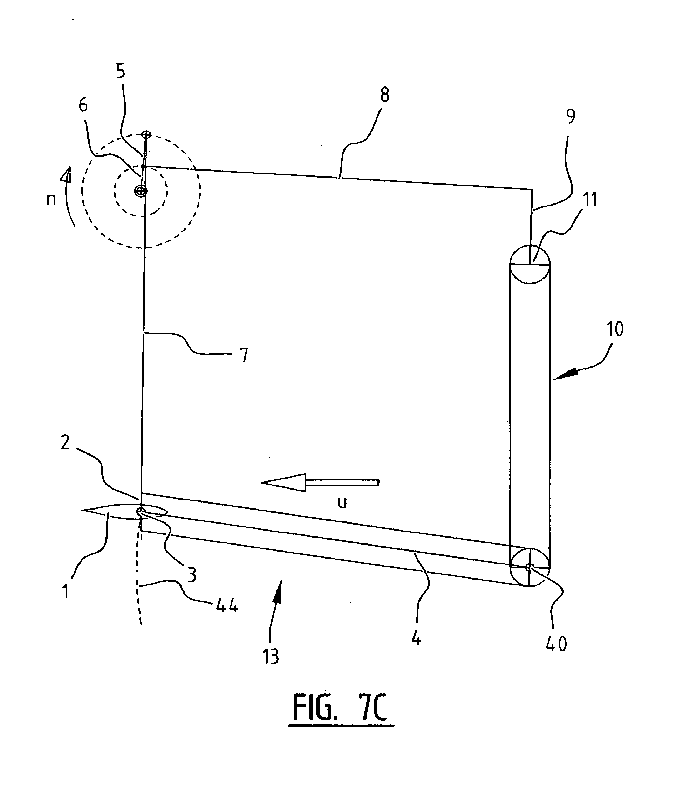

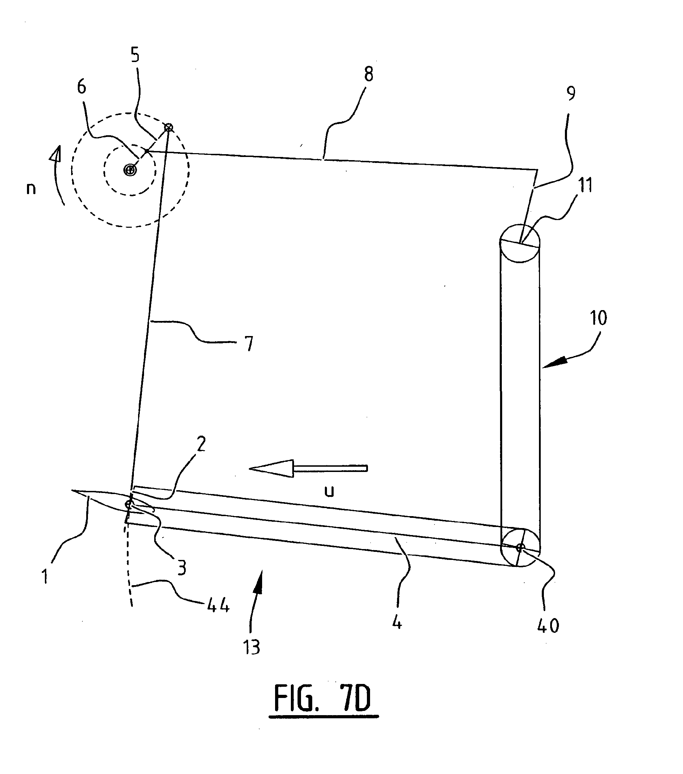

In the apparatus 18 as shown in figures 6 and 7:
- the heave crank pin offset A and the pitch crank pin offset C are adjusted;
- the phase offset θ between the heave crankshaft 5 and the pitch crankshaft 6, is adjusted;
- the length of the pitch connection rod 8 is adjusted;
- the length of the lever rod 9 is adjusted;
- the angle α between the lever rod 9 and the first parallelogram 10 is adjusted; and
- the location of the fixed rotation point 11 connecting the lever 9 and the first parallelogram 10 is adjusted, such that at a certain inflow speed U and a certain rotation speed n of the crankshafts, the rotation speed being a representation of the frequency of the generated heave motion, the foil 1 will oscillate in that way that, as shown in figures 3A and 3B wherein the angle of attack as a percentage of the maximum absolute angle of attack set out against the time in percentage of the time of a oscillation cycle of the heave motion is shown, over 65% to 85% of the oscillation cycle of the heave motion, for each stroke F, G, of the foil, the absolute angle of attack is more than 60% of the maximum absolute angle of attack during the stroke F, G.

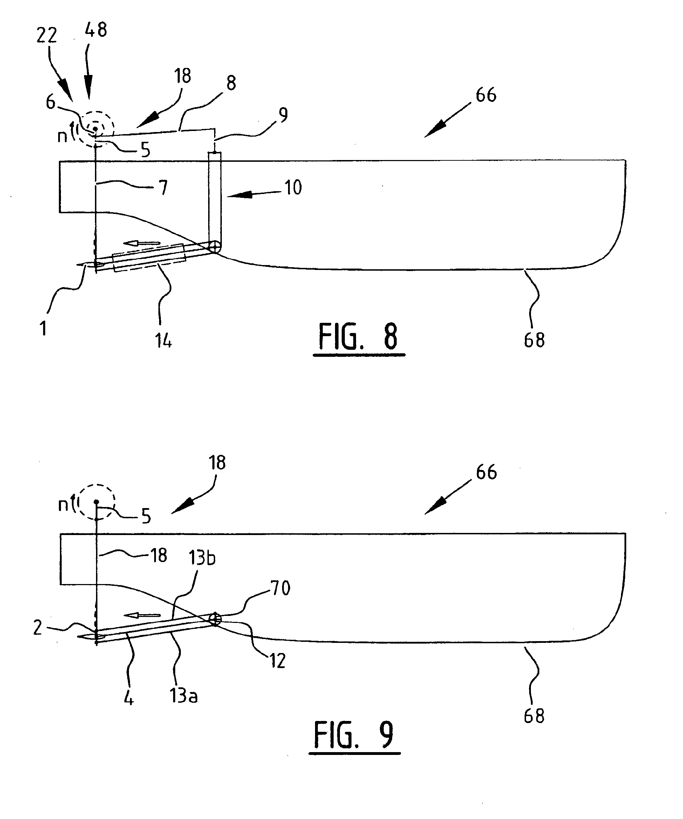

In figure 8 a vessel 66 is shown having a hull 68 and the apparatus 18 of figure 6, wherein the foil 1 is located outside the hull 68. The apparatus 18 comprises a drive (not shown) for driving the heave crank mechanism 22 and the pitch crank mechanism 48 such that the heave crank mechanism 22 and the pitch crank mechanism 48 are given a certain rotation speed n.

The second parallelogram 13 can be placed in a streamlined enclosure 14 (schematically shown) to reduce the drag of the rods of the second parallelogram 13. The streamlined enclosure 14 can be embodied by a hollow guide connection rod 4.

The part of the pitch connection structure 50, e.g. components 8, 9, 10, between the second crankshaft 6 and the second parallelogram 13 is located inside the vessel 66, resulting in an uncomplicated mechanism with low disturbance of the inflow to the foil.

In figure 9 an alternative embodiment is shown of the apparatus 18 according the invention as shown in figure 8. In the apparatus as shown in figure 9 the pitch adjusting mechanism 50 comprises the pitch adjusting lever 2 which is connected to two rods 13a, 13b and another lever 70 forming the pitch parallelogram 13 to adjust the pitch of the foil 1. The adjustment of the parallelogram 13 is done at the site of the fixed rotation point 12 of the guide connection rod 4 via a known means like an electromotor, or a cylinder. Instead of rods 13a, 13b a chain or cables can be used to form the parallelogram 13.

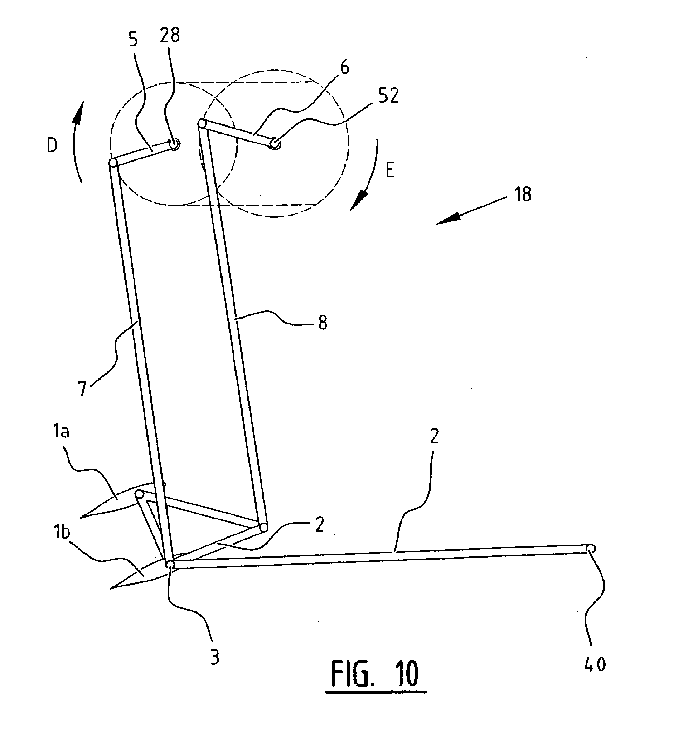

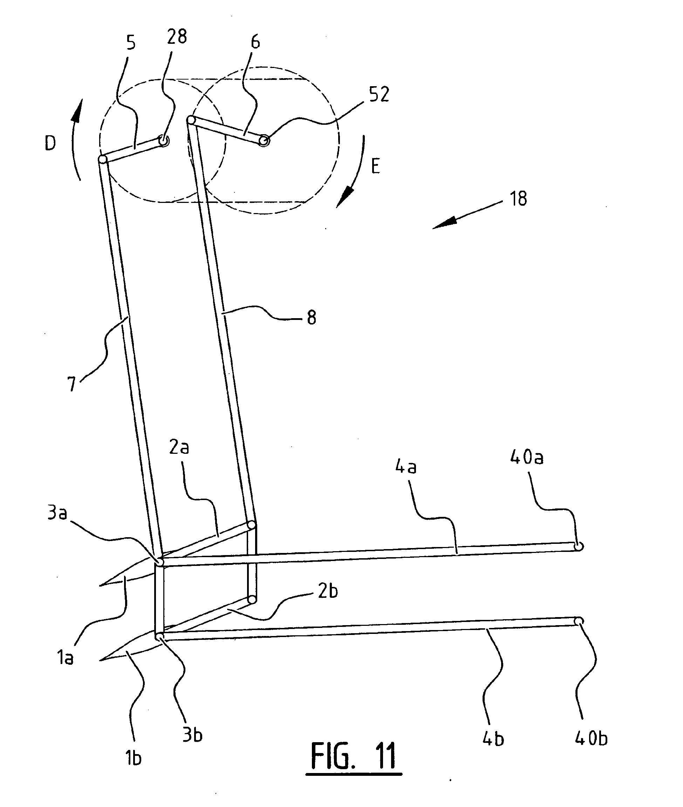

Instead of one foil 1 per apparatus 18 as shown in figures 1 to 9, more than one foil 1a, 1b per apparatus 18 may be applied like in figure 10 and figure 11. Another aspect not being part of the invention as shown in figures 10 and 11 discloses the possibility that the first axis of rotation 28 and the seventh axis of rotation 52 do not coincide.

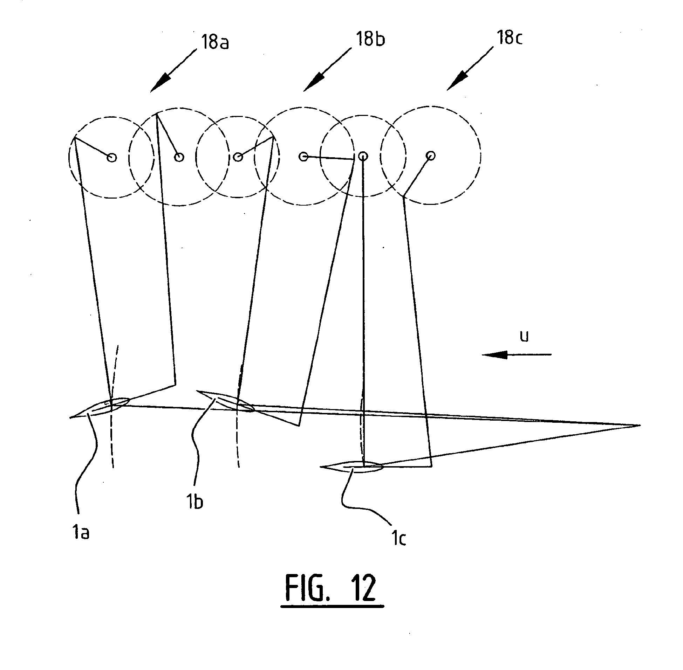

As shown in figure 12 more than one apparatus 18a, 18b, 18c can be connected to each other with a phase difference:
- to get a less oscillating pulse;
- to induce an oscillating pulse by one of the foils while the other is in top or bottom;
- to increase the efficiency by reducing the trust load per blade.

In figures 3A and 3B is shown that for each stroke of the foil, the absolute angle of attack is more than 60% of the maximum absolute angle of attack during the stroke over 65% to 85% of the time to complete the stroke, and that the respective times to complete each of the strokes are substantially the same. For each stroke, the curve is a flattened curve. It could also be that not for each stroke of the foil, the absolute angle of attack is more than 60% of the maximum absolute angle of attack during the stroke over 65% to 85% of the stroke, while sto over 65% to 85% of the oscillation cycle of the heave motion, for each stroke of the foil, the absolute angle of attack is more than 60% of the maximum absolute angle of attack during the stroke. In that case for instance only the curve of one of the strokes can be flattened. Furthermore, the respective times to complete each of the strokes could also differ.

The rotation direction for both of the two crankshafts 5 and 6 as shown in figures 1 to 12 is clockwise. Other variations of the rotation direction of the cranks with the principles of the inventions can be applied as well, such as the rotation direction of the two crankshafts 5 and 6 being counter clockwise, or the rotation of one of the crankshafts being clockwise and the other counter clockwise.

In the figures the foil has a symmetrical foil shape, but it could take other forms while sto acting as a lifting surface, including a simple flat plate, a foil with an active tail flap or an eye shaped profile.

In the figures the guiding structure is formed as a connecting structure comprising a number of rods connecting the foil to a point that is stationary relative to the first axis of rotation. However, the guide structure could for instance also be formed as a rail structure along which the third axis of rotation moves during the heave motion of the foil.

In the figures the heave control mechanism has a heave crank mechanism. Instead of a heave crank mechanism also a linear displacement mechanism could be used to generate and or control the heave motion of the foil, such as a linear motor or a linear hydraulic or pneumatic cylinder.

It will be obvious, that only a few possible embodiments of the apparatus according to the invention have been shown in the drawings and described in the inventions and that, as already indicated in the descriptions of the inventions, changes can be made without departing from the inventive idea, as it has been indicated in the claims.

## Claims

1. Apparatus (18) for oscillating a foil (1) in a fluid for producing trust, comprising
- a heave motion control mechanism (20) functionally connected to the foil (1) and configured to realize an oscillating heave motion of the foil, the oscillating heave motion consisting of two strokes of the foil in opposite direction;
- a pitch adjusting mechanism (46) functionally connected to the foil (1) for adjusting the pitch of the foil (1) during the oscillation cycle of the heave motion and configured to realize an oscillating pitching motion of the foil relative to the fluid;
wherein the heave motion control mechanism (20) comprises:
- a heave crank mechanism (22) having a first crankshaft (5) rotatable about a first axis of rotation (28) and having a first crank pin offset (A) relative to the first axis of rotation (28);
- a heave connection structure (24) which is at one end rotatable connected to the first crank pin (30) about a second axis of rotation (32) and at another end rotatable connected to the foil (1) about a third axis of rotation (3); and
- a guiding structure (26) for guiding the oscillating heave motion of the foil (1);
wherein the pitch adjusting mechanism (46) comprises:
- a pitch crank mechanism (48) having a second crankshaft (6) rotatable about a seventh axis of rotation (52) and having a second crank pin (54) offset (C) relative to the seventh axis of rotation (52);
- a pitch connection structure (50) which is with one end rotatable connected to the second crank pin (54) about an eighth axis of rotation (56) and with another end connected to the foil at a connection point (60) offset relative to the third axis of rotation (3) by means of a pitch adjusting lever (2);
wherein
- the heave crank mechanism (22) and the pitch crank mechanism (48) are functionally connected such that when driven the speed of revolution (D) of the heave crank mechanism (22) about the first axis of rotation (28) is the same as the speed of revolution (E) of the pitch crank mechanism (48) about the seventh axis of rotation (52);
wherein
- the apparatus (28) further comprises a drive configured for driving at least one of the heave crank mechanism (22) and the pitch crank mechanism (48);
wherein the heave motion control mechanism (20) and the pitch adjusting mechanism (46) are configured such that
- at at least one determined inflow speed (u), and at at least one frequency of the oscillating heave motion, over 65% to 85% of the oscillation cycle of the heave motion for each stroke of the foil, the absolute angle of attack is more than 60% of the maximum absolute angle of attack during the stroke;
**characterised in that**
- the first axis of rotation (28) and the seventh axis of rotation (52) coincide.

2. Apparatus according to claim 1,
wherein
- for each stroke of the foil, the absolute angle of attack is more than 60% of the maximum absolute angle of attack during the stroke over 65% to 85% of the stroke; preferably one of
- over 65% to 85% of the time to complete the stroke; and
- over 65% to 85% of the path of the stroke.

3. Apparatus according to claim 1 or 2,
wherein
- the heave connection structure (24) comprises a heave connection rod (7) which is at a first end thereof rotatable connected to the first crank pin (30) about the second axis of rotation (32) and at a second end thereof connected to the foil (1).

4. Apparatus according to claim 3,
wherein
- the second end of the heave connection rod (7) is rotatable connected to the foil (1) about the third axis of rotation (3).

5. Apparatus according to claim 3,
wherein
- the heave connection structure (24) further comprises a first parallelogram structure (62), which connects the second end of the heave connection rod (7) to the foil (1).

6. Apparatus according to any of the claims 1 to 5, wherein the foil (1) is rotatable connected to the guiding structure (26) about a fifth axis of rotation (38), wherein preferably the third axis of rotation (3) and the fifth axis of rotation (38) coincide.

7. Apparatus according to claim 6, wherein the guiding structure (26) comprises a guide connecting structure (36) which is with one end rotatable connected to the foil (1) about the fifth axis of rotation (38) and with another end rotatable connected with a stationary point (40), which is stationary relative to the first axis of rotation (28), about a sixth axis of rotation (42), wherein preferably the guide connecting structure (36) comprises a guide connection rod (4) which is at a first end thereof rotatable connected to the foil (1) about the fifth axis of rotation (38) and at a second end thereof rotatable connected to the stationary point (40) about the sixth axis of rotation (42).

8. Apparatus according to claim 7, wherein the pitch connection structure (50) comprises a pitch connection rod (8) which is at a first end thereof rotatable connected to the second crank pin (54) about the eighth axis of rotation (56) and at a second end thereof rotatable connected to the foil (1).

9. Apparatus according to claim 8,
wherein
- the second end of the pitch connection rod (8) is rotatable connected to the foil (1) at the connection point (60) about a ninth axis of rotation (58).

10. Apparatus according to claim 8,
wherein the pitch connection structure (50) further comprises a second parallelogram structure (64), which connects the second end of the pitch connection rod (8) to the connection point.

11. Vessel (66), comprising
- a hull (68); and
- an apparatus (18) according to any of the claims 1 to 10; wherein at least the foil (1) is located outside the hull (68).

12. Installation for generating a flow or whirl in a fluid, comprising
- an apparatus (18) according to any of the claims 1 to 10;
wherein at least the foil is located in the fluid in which the flow or whirl is to be generated.

13. Installation, comprising
- at least two functionally connected apparatuses (18a, 18b, 18c) according to any of the claims 1 to 10, wherein the apparatuses are out of phase with each other.

## Patentansprüche

1. Vorrichtung (18) zum Oszillieren eines Flügels (1) in einer Flüssigkeit, um Schub zu erzeugen, die
- einen Tauchbewegungssteuermechanismus (20), der mit dem Flügel (1) wirkverbunden ist und gestaltet ist, eine oszillierende Tauchbewegung des Flügels zu verwirklichen, wobei die oszillierende Tauchbewegung aus zwei Hüben des Flügels in entgegengesetzter Richtung besteht;
- einen Neigungseinstellmechanismus (46) umfasst, der mit dem Flügel (1) wirkverbunden ist zum Einstellen der Neigung des Flügels (1) während des Oszillationszyklus der Tauchbewegung und der gestaltet ist, eine oszillierende Neigungsbewegung des Flügels relativ zu der Flüssigkeit zu verwirklichen;
wobei der Tauchbewegungssteuermechanismus (20) Folgendes umfasst:
- einen Tauchkurbelmechanismus (22) mit einer ersten Kurbelwelle (5), die um eine erste Drehachse (28) drehbar ist, und einem ersten Kurbelzapfenversatz (A) relativ zu der ersten Drehachse (28);
- eine Tauchverbindungsstruktur (24), die an einem Ende über eine zweite Drehachse (32) drehbar mit dem ersten Kurbelzapfen (30) verbunden ist und an einem anderen Ende über eine dritte Drehachse (3) drehbar mit den Flügel (1) verbunden ist; und
- eine Führungsstruktur (26) zum Führen der oszillierenden Tauchbewegung des Flügels (1);
wobei der Neigungseinstellmechanismus (46) Folgendes umfasst:
- einen Neigungskurbelmechanismus (48) mit einer zweiten Kurbelwelle (6), die um eine siebte Drehachse (52) drehbar ist, und einem zweiten Kurbelzapfen- (54) versatz (C) relativ zu der siebten Drehachse (52);
- eine Neigungsverbindungsstruktur (50), die mit einem Ende über eine achte Drehachse (56) drehbar mit dem zweiten Kurbelzapfen (54) verbunden ist und mit einem anderen Ende mit dem Flügel an einem Verbindungspunkt (60), der relativ zu der dritten Drehachse (3) versetzt ist, mittels eines Neigungseinstellhebels (2) verbunden ist;
wobei
- der Tauchkurbelmechanismus (22) und der Neigungskurbelmechanismus (48) derart miteinander wirkverbunden sind, dass im Antriebsfall die Drehzahl (D) des Tauchkurbelmechanismus (22) um die erste Drehachse (28) gleich mit der Drehzahl (E) des Neigungskurbelmechanismus (48) um die siebte Drehachse (52) ist;
wobei
- die Vorrichtung (28) weiterhin einen Antrieb umfasst, der gestaltet ist, zumindest den Tauchkurbelmechanismus (22) oder den Neigungskurbelmechanismus (48) anzutreiben;
wobei der Tauchbewegungssteuermechanismus (20) und der Neigungseinstellmechanismus (46) derart gestaltet sind, dass
- bei zumindest einer bestimmten Anströmgeschwindigkeit (u) und zumindest einer Frequenz der oszillierenden Tauchbewegung der absolute Anströmwinkel über 65% bis 85% des Oszillationszyklus der Tauchbewegung für jeden Hub des Flügels mehr als 60% des maximalen absoluten Anströmwinkels während des Hubs beträgt;
**dadurch gekennzeichnet, dass**
- die erste Drehachse (28) und die siebte Drehachse (52) übereinstimmen.

2. Vorrichtung gemäß Anspruch 1, wobei
- für jeden Hub des Flügels der absolute Anströmwinkel mehr als 60% des maximalen absoluten Anströmwinkels während des Hubs über 65% bis 85% des Hubs beträgt;
bevorzugt
- über 65% bis 85% der Zeit, um den Hub auszuführen;
oder
- über 65% bis 85% des Hubwegs.

3. Vorrichtung nach Anspruch 1 oder 2, wobei
- die Tauchverbindungsstruktur (24) eine Tauchverbindungsstange (7) umfasst, die an einem ersten Ende davon über die zweite Drehachse (32) drehbar mit dem ersten Kurbelzapfen (30) verbunden ist und an einem zweiten Ende davon mit dem Flügel (1) verbunden ist.

4. Vorrichtung nach Anspruch 3, wobei
- das zweite Ende der Tauchverbindungsstange (7) über die dritte Drehachse (3) drehbar mit dem Flügel (1) verbunden ist.

5. Vorrichtung nach Anspruch 3, wobei
- die Tauchverbindungsstruktur (24) weiterhin eine erste Parallelogrammstruktur (62) umfasst, die das zweite Ende der Tauchverbindungsstange (7) mit dem Flügel (1) verbindet.

6. Vorrichtung nach einem der Ansprüche 1 bis 5, wobei der Flügel (1) über eine fünfte Drehachse (38) drehbar mit der Führungsstruktur (26) verbunden ist, wobei die dritte Drehachse (3) und die fünfte Drehachse (38) bevorzugt übereinstimmen.

7. Vorrichtung nach Anspruch 6, wobei die Führungsstruktur (26) eine Führungsverbindungsstruktur (36) umfasst, die mit einem Ende über die fünfte Drehachse (38) drehbar mit dem Flügel (1) verbunden ist und mit einem anderen Ende über eine sechste Drehachse (42) drehbar mit einem stationären Punkt (40), der relativ zu der ersten Drehachse (28) stationär ist, verbunden ist, wobei bevorzugt die Führungsverbindungsstruktur (36) eine Führungsverbindungsstange (4) umfasst, die an einem ersten Ende davon über die fünfte Drehachse (38) drehbar mit dem Flügel (1) verbunden ist und an einem zweiten Ende davon über die sechste Drehachse (42) drehbar mit dem stationären Punkt (40) verbunden ist.

8. Vorrichtung nach Anspruch 7, wobei die Neigungsverbindungsstruktur (50) eine Neigungsverbindungsstange (8) umfasst, die an einem ersten Ende davon über die achte Drehachse (56) drehbar mit dem zweiten Kurbelzapfen (54) verbunden ist und an einem zweiten Enden davon drehbar mit dem Flügel (1) verbunden ist.

9. Vorrichtung nach Anspruch 8, wobei
- das zweite Ende der Neigungsverbindungsstange (8) über eine neunte Drehachse (58) an dem Verbindungspunkt (60) drehbar mit dem Flügel (1) verbunden ist.

10. Vorrichtung nach Anspruch 8, wobei die Neigungsverbindungsstruktur (50) weiterhin eine zweite Parallelogrammstruktur (64) umfasst, die das zweite Ende der Neigungsverbindungsstange (8) mit dem Verbindungspunkt verbindet.

11. Wasserfahrzeug (66), das
- einen Rumpf (68); und
- eine Vorrichtung (18) nach einem der Ansprüche 1 bis 10 umfasst;
wobei sich zumindest der Flügel (1) außerhalb des Rumpfes (68) befindet.

12. Installation zum Erzeugen eines Flusses oder Wirbels in einer Flüssigkeit, die
- eine Vorrichtung (18) nach einem Ansprüche 1 bis 10 umfasst;
wobei sich zumindest der Flügel in der Flüssigkeit befindet, in welcher der Fluss oder Wirbel erzeugt werden soll.

13. Installation, die
- zumindest zwei wirkverbundene Vorrichtungen (18a, 18b, 18c) nach einem der Ansprüche 1 bis 10 umfasst,
wobei die Vorrichtungen zueinander phasenverschoben sind.

## Revendications

1. Dispositif (18) destiné à faire osciller un aileron (1) dans un fluide afin de produire une poussée, comprenant :
- un mécanisme de commande de mouvement de tangage (20) couplé fonctionnellement à l'aileron (1) et configuré de manière à produire un mouvement de tangage oscillant sur l'aileron, le mouvement de tangage oscillant consistant en deux courses de l'aileron dans des directions opposées ;
- un mécanisme de réglage d'inclinaison (46) couplé fonctionnellement à l'aileron (1) afin d'ajuster l'inclinaison de l'aileron (1) pendant le cycle d'oscillation du mouvement de tangage et configuré de manière à produire un mouvement d'inclinaison oscillant de l'aileron par rapport au fluide ;
dans lequel le mécanisme de commande de mouvement de tangage (20) comprend :
- un mécanisme de tangage à manivelle (22) comportant un premier vilebrequin (5) pouvant tourner autour d'un premier axe rotation (28) et présentant un décalage (A) de première broche de manivelle par rapport au premier axe de rotation (28) ;
- une structure de liaison de tangage (24) qui, à une première extrémité, est couplée à la première broche de manivelle (30) de manière à pouvoir tourner autour d'un deuxième axe de rotation (32) et, à une autre extrémité, est couplée à l'aileron (1) de manière à pouvoir tourner autour d'un troisième axe de rotation (3) ; et
- une structure de guidage (26) destinée à guider le mouvement de tangage oscillant de l'aileron (1) ;
dans lequel le mécanisme de réglage d'inclinaison (46) comprend :
- un mécanisme d'inclinaison à manivelle (48) comportant un second vilebrequin (6) pouvant tourner autour d'un septième axe de rotation (52) et comportant une seconde broche de manivelle (54) décalée (C) par rapport au septième axe de rotation (52) ;
- une structure de liaison d'inclinaison (50) qui est, à une première extrémité, couplée à la seconde broche de manivelle (54) de manière à pouvoir tourner autour d'un huitième axe de rotation (56) et, à une autre extrémité, couplée à l'aileron au niveau d'un point de liaison (60) décalé par rapport au troisième axe de rotation (3) au moyen d'un levier de réglage d'inclinaison (2) ;
dans lequel :
- le mécanisme de tangage à manivelle (22) et le mécanisme d'inclinaison à manivelle (48) sont couplés fonctionnellement de telle sorte que, lorsque qu'ils sont entraînés, la vitesse de rotation (D) du mécanisme de tangage à manivelle (22) autour du premier axe rotation (28) est identique à la vitesse de rotation (E) du mécanisme d'inclinaison à manivelle (48) autour du septième axe de rotation (52) ;
dans lequel :
- le dispositif (28) comprend en outre un dispositif d'entraînement configuré de manière à entraîner au moins l'un du mécanisme de tangage à manivelle (22) et du mécanisme d'inclinaison à manivelle (48) ;
dans lequel le mécanisme de commande de mouvement de tangage (20) et le mécanisme de réglage d'inclinaison (46) sont configurés de telle sorte que :
- à au moins une vitesse d'entrée (u) déterminée, et à au moins une fréquence du mouvement de tangage oscillant, sur 65% à 85% du cycle d'oscillation du mouvement de tangage pour chaque course de l'aileron, l'angle d'attaque absolu est supérieur à 60 % de l'angle d'attaque absolu maximum au cours de la course ;
**caractérisé en ce que** :
- le premier axe de rotation (28) et le septième axe de rotation (52) coïncident.

2. Dispositif selon la revendication 1, dans lequel :
- pour chaque course de l'aileron, l'angle d'attaque absolu est supérieur à 60% de l'angle d'attaque absolu maximum pendant la course sur de 65% à 85% de la course ; de préférence, sur l'un parmi :
- de 65% à 85% du temps total de la course ; et
- de 65% à 85% du trajet de la course.

3. Dispositif selon la revendication 1 ou 2, dans lequel :
- la structure de liaison de tangage (24) comprend une barre de liaison de tangage (7) qui est, à une première extrémité de celle-ci, couplée à la première broche de manivelle (30) de manière à pouvoir tourner autour du deuxième axe de rotation (32) et à une seconde extrémité de celle-ci, couplée à l'aileron (1).

4. Dispositif selon la revendication 3, dans lequel :
- la seconde extrémité de la barre de liaison de tangage (7) est couplée à l'aileron (1) de manière à pouvoir tourner autour du troisième axe de rotation (3).

5. Dispositif selon la revendication 3, dans lequel :
- la structure de liaison de tangage (24) comprend en outre une première structure en parallélogramme (62), qui relie la seconde extrémité de la barre de liaison de tangage (7) à l'aileron (1).

6. Dispositif selon l'une quelconque des revendications 1 à 5, dans lequel l'aileron (1) est couplé à la structure de guidage (26) de manière à pouvoir tourner autour d'un cinquième axe de rotation (38), dans lequel, de préférence, le troisième axe de rotation (3) et le cinquième axe de rotation (38) coïncident.

7. Dispositif selon la revendication 6, dans lequel la structure de guidage (26) comprend une structure de liaison de guide (36) qui présente une première extrémité couplée à l'aileron (1) de manière à pouvoir tourner autour du cinquième axe de rotation (38) et une autre extrémité couplée à un point fixe (40), qui est fixe par rapport au premier axe de rotation (28), de manière à pouvoir tourner autour d'un sixième axe de rotation (42), dans lequel, de préférence, la structure de liaison de guide (36) comprend une barre de liaison de guide (4) qui est, à une première extrémité de celle-ci, couplée à l'aileron (1) de manière à pouvoir tourner autour du cinquième axe de rotation (38) et, à une seconde extrémité de celle-ci, couplée au point fixe (40) de manière à pouvoir tourner autour du sixième axe de rotation (42).

8. Dispositif selon la revendication 7, dans lequel la structure de liaison d'inclinaison (50) comprend une barre de liaison d'inclinaison (8) qui est, à une première extrémité de celle-ci, couplée à la seconde broche de manivelle (54) de manière à pouvoir tourner autour du huitième axe de rotation (56) et à une seconde extrémité de celle-ci, couplée à l'aileron (1) de manière à pouvoir tourner.

9. Dispositif selon la revendication 8, dans lequel :
- la seconde extrémité de la barre de liaison d'inclinaison (8) est couplée à l'aileron (1) au point de liaison (60) de manière à pouvoir tourner autour d'un neuvième axe de rotation (58).

10. Dispositif selon la revendication 8,
dans lequel la structure de liaison d'inclinaison (50) comprend en outre une seconde structure en parallélogramme (64), qui couple la seconde extrémité de la barre de liaison d'inclinaison (8) au point de liaison.

11. Bateau (66), comprenant:
une coque (68) ; et
un dispositif (18) selon l'une quelconque des revendications 1 à 10 ; dans lequel au moins l'aileron (1) est situé à l'extérieur de la coque (68).

12. Installation destinée à produire un écoulement ou tourbillon sur un fluide, comprenant :
- un dispositif (18) selon l'une quelconque des revendications 1 à 10 ;
dans laquelle au moins l'aileron est situé dans le fluide dans lequel l'écoulement ou le tourbillon doit être produit.

13. Installation, comprenant :
- au moins deux dispositifs (18a, 18b, 18c) selon l'une quelconque des revendications 1 à 10, couplés fonctionnellement, dans laquelle les dispositifs sont déphasés l'un par rapport à l'autre.
